# EUROPEAN PATENT APPLICATION

(11) **EP 2 745 914 A2**
(43) Date of publication of application: **25.06.2014**
(21) Application number: 13198447.8
(22) Date of filing: 19.12.2013
(51) Int. Cl.: B01D 53/52, C01B 17/05

(54) **Process for desulphurization of gases**

(30) Priority: 24.12.2012 EP 12199317
(71) Applicant: Université de Mons, 7000 Mons (BE)
(72) Inventor: Vanden Eynde, Jean-Jacques, 7000 Mons (BE); Benchabane, Yohann, 7000 Mons (BE)
(74) Representative: Farmer, Guy Dominic

(57) **Abstract**

Wet process for the desulphurization of hydrogen sulphide laden gas, comprising absorption of hydrogen sulphide in aqueous medium by a carbonate salt, oxidation of hydrogenosulphide into elemental sulphur in the presence of a vanadium compound with concomitant reduction of said vanadium compound, re-oxidation of said vanadium compound in the presence of the couple quinone-2-sulfonic acid/hydroquinone-2-sulfonic acid or quinone-2-phosphoric acid/hydroquinone-2-phosphoric acid or a salt thereof, the substituted hydroquinone catalyst being reoxidized in the presence of oxygen.

## Description

The present invention relates to a process for the desulphurization of gases, including natural gas, industrial off-gases, e.g. from cokeworks, and off-gases generated by biomethanization, particularly to a wet process for desulphurization of gases containing hydrogen sulphide, more specifically to an improved Stretford process.

### Background of the Invention

Industrial off-gases mostly still contain usable components and re-use of such gases may appear as economically interesting. Such gases may for instance find application as fuel in heat generation equipment. However, there is nowadays an ever increasing pressure to reduce environmental contamination and more particularly contamination by sulphur and derivatives thereof such as SO₂, H₂S and others. Industrial off gases hence have to undergo one or more treatment before any further use.

Natural gas contains hydrogen sulphide to variable extents and there is a need to remove this sulphur containing component prior to further use of natural gas, e.g. as fuel in heat generating equipment, in order to reduce environmental contamination.

Among the known processes for desulphurization, one may cite oxidative dry processes, such as those making use of iron or zinc oxide, oxidative wet processes, such as the Stretford process, the Perox process, Takahaz, Thylox and others, and neutralization processes, such as Sulfiban, Cyclasulf, Combiclaus and Vacasulf. The Stretford process is the most widely used desulphurization process in the US and Europe. It is known to allow removal of more than 99.9 % of hydrogen sulphide by conversion into elemental sulphur. Extremely low residual hydrogen sulphide concentrations in the order of parts per million (ppm) may be reached in the gas finally rejected to the atmosphere. It is used to remove hydrogen sulphide from off-gas generated in coke works, synthesis gas, natural gas, refinery off-gas and others.

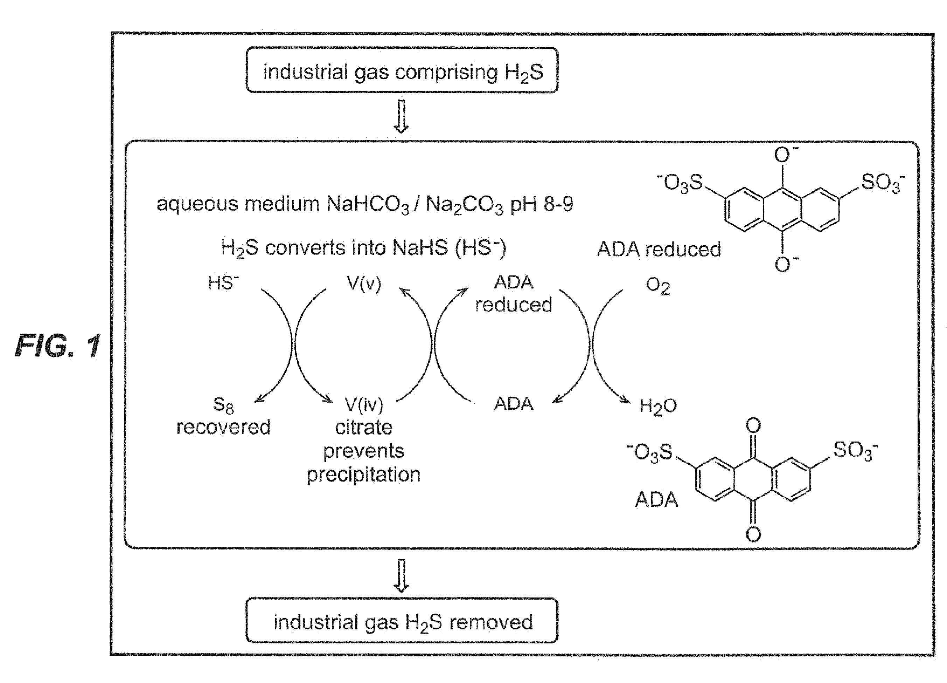

Fig. 1 is a schematic representation of the main reactions occurring in the Stretford process. In a first step, the hydrogen sulphide containing gas is passed into a scrubber in which H₂S is absorbed by carbonate, preferably sodium carbonate, at a pH between 8 and 9, and converted into HS⁻ .

H₂S + Na₂CO₃ -> NaHS + NaHCO₃

Sodium hygrogen sulphide is then oxidized into S₈ in the presence of a vanadium salt at oxidation state +5. This reaction is effected at a pH in the range of 8.5 to 9.5. The precipitation of sulphur is relatively fast, depending on the concentration of the vanadate compound. The S₈ in solid form may then easily be removed from the solution. The vanadium salt is reduced from state +5 to state +4 which is insoluble in water. Citrate is generally added in order to prevent precipitation of vanadium, leading to a water-soluble vanadium complex. The vanadium at state +4 is oxidized back into state +5 again by anthraquinone-2,7-disulfonic acid (ADA) which acts as electron acceptor and catalyzes the conversion of sulphides into sulphur. The ADA in its reduced form may then be oxidized by oxygen (air), e.g. by air bubbling. Air injection simultaneously allows for separation of sulphur fines by flotation.

2V⁴⁺ + ADA -> 2V⁵⁺ + ADA_{reduced}

2ADA_{reduced} + O₂ -> 2ADA + H₂O

In an industrial process, a Stretford desulphurization plant generally comprises (i) a scrubber unit in which hydrogen sulphide is removed from the gas to be treated flowing through it, by absorption in an aqueous solution comprising a carbonate absorber, and is further oxidized to elemental sulphur as described above, and (ii) an oxidizer vessel equipped with air injection, in which the elemental sulphur is obtained as a foam or froth while the catalyst is re-oxidized by the oxygen contained in the bubbled air. The froth loaded with elemental sulphur is transferred into a slurry tank and sent to a centrifuge for separation of elemental sulphur that may then be further treated, such as in an autoclave. The so-called Stretford liquor is withdrawn from said oxidizer vessel and recycled to the scrubber unit.

The anthraquinone-2,7-disulfonic acid (ADA) catalyst plays an important role in the Stretford process. This compound is prepared from anthraquinone and oleum at high temperatures in the presence of a mercury salt. Sulphuric acid vapors are corrosive for the mouth and gastro-intestinal tract. Sulphuric acid is not environmentally friendly. As far as mercury salts are concerned, human exposure to derivatives of mercury is known to cause among others lesions to the gastro-intestinal tract and headache.

Furthermore, the preparation of anthraquinone-2,7-disulfonic acid (ADA) concomitantly produces the 2,6-disulfonic isomer which is far less soluble and needs to be removed prior to use in the Stretford process, thus constituting a major waste material and source of environmental pollution.

There thus is a need for an ADA substitute in such desulphurization processes, which overcomes some at least of the above inconveniences, preferably a substitute that is more environmentally friendly, i.e. less polluting, in its manufacturing process as well as in its use in the Stretford process, and in line with the requirements of the REACH legislation. A desulphurization process making use of such an ADA substitute should obviously show advantageous economics.

US-3937795 is related to a process for the desulphurization of gases containing hydrogen sulphide, as well as their decyanization and removal of sulfurous acid, in which process naphtoquino chelate compounds are employed on a component of an absorption medium.

US-4460554 discloses a process for removing hydrogen sulphide from sour gas streams wherein the hydrogen sulphide is brought into contact with a liquid alkaline absorption medium containing a vanadium-boron complex sequestrant capable of oxidizing hydrogen sulphide in the solution to elemental sulphur. The solution is regenerated by reoxidizing the reduced vanadium with an oxygen-containing gas in the presence of a reoxidation catalyst. The reoxidation catalyst comprises hydroquinone or quinone that contains hydroxyl or keto radicals on the same ring separated by two carbon atoms.

WO82/01364 discloses a Stretford type process making use of a quinone-free washing solution and an inorganic catalyst.

FR-1211130 discloses a process for removal of hydrogen sulphide from gas mixtures in the presence of an arsenic based oxidation agent and a catalyst that comprises polyvalent phenol compounds, derivates and oxidation products thereof. Hydroquinone and hydroquinone sulfonic acid are cited in an extensive list of possible catalysts. The example makes use of hydroquinone. As mentioned, though, these catalysts are known to cause side reactions and formation of sulphur oxidation products in the absence of free arseniate, and thus are believed suitable as catalysts for the Stretford process when such free arseniate compounds are present.

RU-2041871 and RU-1660357 concern methods of preparation of hydroquinone-2-sulfonic acid salts. The use in gas treatment processes such as a Stretford process is not disclosed.

US-3629327 and FR-2218104 describe the preparation of hydroquinone-2-sulfonic acid. Again, the use in gas treatment processes such as a Stretford process is not taught.

US-3509207 describes the preparation of hydroquinone-2-sulfonic acid for use in the pharmaceutical area.

### Summary of the Invention

The present invention thus provides a wet process for desulphurization of gases containing hydrogen sulphide, comprising absorption of hydrogen sulphide in aqueous medium by a carbonate salt, oxidation of hydrogenosulphide into elemental sulphur in the presence of a vanadium compound with concomitant reduction of said vanadium compound, re-oxidation of said vanadium compound in the presence of the couple quinone-2-sulfonic acid/hydroquinone-2-sulfonic acid or quinone-2-phosphoric acid/hydroquinone-2-phosphoric acid or a salt thereof, the substituted hydroquinone compound being re-oxidized in the presence of oxygen. The elemental sulphur may be withdrawn from the reaction medium and further treated by means known per se. The said vanadium compound advantageously is a vanadate salt at oxidation state +5 which is reduced to oxidation state +4. Latter is known to be largely water insoluble and may be maintained in solution by addition of citric acid which is believed to form a water-soluble complex of the +4 vanadium compound. Oxygen is advantageously brought into the medium by air bubbling.

More specifically, the present invention provides an improved Stretford process in which the couple hydroquinone-2-sulfonic acid/quinone-2-sulfonic acid or a salt thereof is used as the catalyst for re-oxidation of the 4+ vanadium compound. As is known in the art, the elemental sulphur is found in a foam or froth which may be transferred to a centrifuge and possibly additionally to an autoclave in order to further improve the sulphur product quality for later use. The vanadate salt advantageously is the sodium ammonium vanadate.

The process may be performed in a processing unit comprising a scrubber through which hydrogen sulphide loaded gas is circulated prior to being sent to the atmosphere, and in which the hydrogen sulphide is absorbed into the aqueous medium by a carbonate salt and oxidized into elemental sulphur in the presence of a vanadium compound. The aqueous medium loaded with elemental sulphur is circulated to a so-called oxidizer in which air is bubbled preferably from the bottom in order to regenerate the catalyst by re-oxidation of the substituted hydroquinone catalyst and to ease separation by flotation of finely divided elemental sulphur in suspension. The foam or froth may be drawn off and transferred to a slurry tank. If so desired, a centrifuge may be arranged for further treatment of the slurry and the recovered elemental sulphur may be transferred to an autoclave. The Stretford liquor is withdrawn from the oxidizer, preferably from the top of the oxidizer, as well as from the centrifuge and may be recirculated to the scrubber for further and repeated absorption of hydrogen sulphide from hydrogen sulphide laden gas.

The catalyst based on quinone-2-sulfonic acid or quinone-2-phosphoric acid or a salt thereof shows an improved efficacy per weight unit as compared to the ADA catalyst. It has been found that for a same level of efficacy, the mass of organic material, that is of catalyst, expressed in parts by weight, can be divided by a factor two. Among the invention catalysts, benzoquinone-2-sulfonic acid or a salt thereof is preferred.

Furthermore, the invention catalyst is more water-soluble than ADA. As a result, it may be transported in more concentrated solutions, at reduced freight costs and energy consumption, and thus at reduced environmental fingerprint.

Quinone-2-sulfonic acid, quinone-2-phosphoric acid and salts thereof show reduced toxicity and better degradability while showing increased efficacy as compared to ADA. These compounds further show essentially no coloring effect on water, thus reducing the environmental impact of waste water that may result from the process.

It has surprisingly been found that the catalyst may be added in its reduced state, as the hydroquinone-2-sulfonic acid, the hydroquinone-2-phosphoric acid or a salt thereof, to the reaction medium contrary to the prior art Stretford process in which the ADA catalyst is added into the medium in its oxidized state, and still provides excellent efficacy.

Hydroquinone-2-sulfonic acid, hydroquinone-2-phosphoric acid and salts thereof are known in the art and the skilled person has preparation processes at hands. It has now been found that hydroquinone-2-sulfonic acid and salts thereof may advantageously be prepared as follows: preparation of a solution of benzoquinone in ethyl acetate or 2-propanol and cooling at approx. 0°C, preparation of a solution of bisulfite in water, mixing both solutions and stirring at a temperature between 0°C and ambient temperature, allowing the mixture to settle, drawing off the aqueous layer. The aqueous layer contains the final product and may be used as such or evaporated in order to isolate the hydroquinone-2-sulfonic acid or salt thereof. The organic layer may be recycled. Advantageously, the aqueous layer may be washed at least once with ethyl acetate or propanol, respectively.

Preferably, the benzoquinone solution (in organic solvent) is added to the bisulfite aqueous solution under stirring. It has been found that this measure provides an increased yield. Contrary to expectations, the reaction may advantageously be performed at ambient temperature.

Advantageously, the other components of the mixture used in the Stretford process, namely the vanadium salt, such as more specifically sodium ammonium vanadate, the citric acid or salt thereof, more specifically sodium citrate, and carbonate, preferably sodium carbonate, may be added directly into the aqueous layer containing hydroquinone-2-sulphonic acid, hydroquinone-2-phosphoric acid or a salt thereof without prior isolation of those species. This obviously reduces the production costs, the environmental impact and further improves the economics.

### Description of Figures

The invention will be described herein below in more details, with reference to the attached drawings and diagrams.
- Fig. 1 shows a schematic representation of the main reactions occurring in the Stretford process;

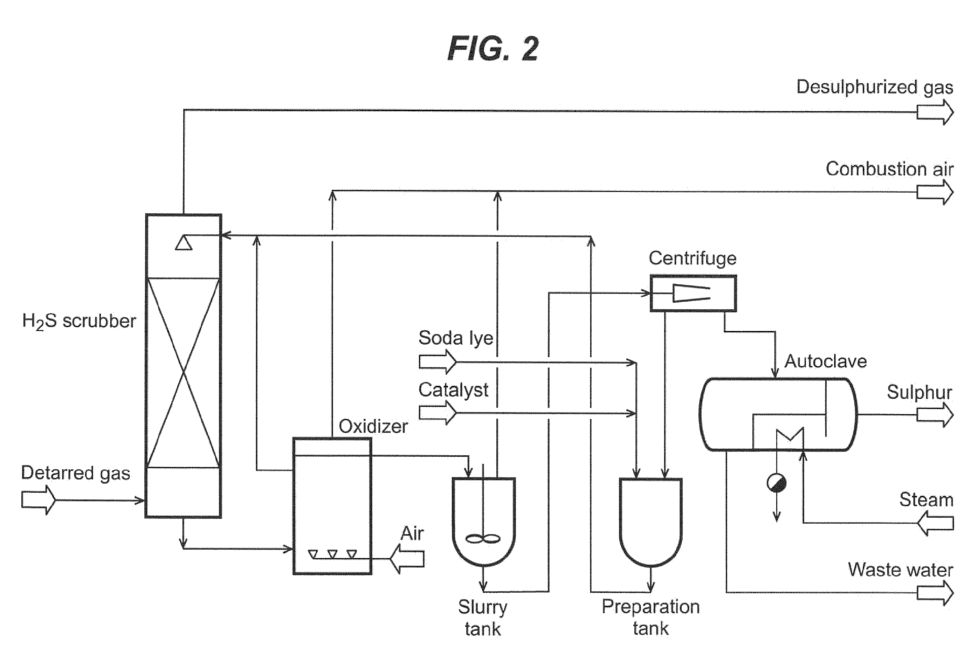

- Fig. 2 is a schematic representation of a Stretford processing unit;
- Fig. 3 shows the reaction curve for the Stretford simulation of Example 2;
- Fig. 4 shows the reaction curve for the Stretford simulation of Example 3.

### Detailed Description of the Invention

The present invention concerns a wet process for desulphurization of gases containing hydrogen sulphide, more specifically a process by absorption of hydrogen sulphide into an aqueous solution and oxidation thereof into elemental sulphur. The process is suitable to treat off-gases from energy producing plants, natural gas, synthesis gas and other industrial off-gases, such as gas from coke works. The absorption is advantageously carried out in a scrubber unit. The gas to be treated passes through the scrubber unit, is brought into contact with an absorption solution comprising carbonate, preferably sodium carbonate, and is liberated to the atmosphere in a treated state. According to the invention, more than 99.9 % of hydrogen sulphide may be removed from the off-gas. In the absorption solution, oxidation is caused by the presence of a vanadium salt at oxidation state +5, such as sodium ammonium vanadate, which is converted into its reduced form at oxidation state +4, preferably at a pH between 8.5 and 9.5. The reduced vanadium compound is known to be insoluble in water but may be maintained in solution by citric acid or a salt thereof which forms a vanadium complex which in turn is water soluble . The reduced vanadium compound may be re-oxidized in the presence of an oxido-redox couple selected from quinone-2-sulphonic acid/hydroquinone-2-sulphonic acid or a salt thereof and quinone-2-phosphoric acid/hydroquinone-2-phosphoric acid or a salt thereof. The catalyst is preferably added initially in its reduced form, more preferably as hydroquinone-2-sulphonic acid or a salt thereof. The counter ion may advantageously be selected from sodium, potassium, ammonium and calcium; sodium is the most preferred. The catalyst needs to be regenerated for repeated or further use in the process. The process is preferably a continuous process in which the resulting solution is continuously or at regular intervals drawn off and transferred to a reaction vessel in which air is bubbled preferably from the bottom in order to re-oxidize the invention quinone catalyst and to generate a foam or froth at the top that allows for separation of elemental sulphur according to flotation techniques known per se. The foam or froth comprises elemental sulphur and may be transferred to a slurry tank and from there to a centrifuge. Further drying may be effected in an autoclave or similar equipment if so desired. The liquor in the reaction vessel, which in upper layers contains the catalyst in its oxidized state may be drawn off and recycled for repeated use as absorption solution, back to the scrubber unit. These reactions are carried out at ambient temperature and under ambient pressure.

While the catalysts are known per se and processes for their preparation are known, it has been found that more particularly hydroquinone-2-sulfonic acid and salts may advantageously be prepared according to the following steps: preparation of a solution of benzoquinone in ethyl acetate or propanol and cooling at approx. 0°C, preparation of a solution of bisulfite in water, mixing both solutions and stirring at a temperature between 0°C and ambient temperature, allowing the mixture to settle, and drawing off the aqueous layer. The aqueous layer contains the final product and may be used as such or evaporated in order to isolate the hydroquinone-2-sulfonic acid or salt thereof. The organic layer may be recycled. Advantageously, the aqueous layer may be washed at least once with ethyl acetate or propanol, respectively. Preferably, the benzoquinone solution (in organic solvent) is added to the bisulfite aqueous solution under preferably vigorous stirring. It has been found that this sequence of addition provides an increased yield in catalyst. Contrary to expectations, it has been found that the reaction produces the desired product at advantageous yields when performed at ambient temperature.

As will easily be understood, such a process is rather environmentally friendly and may be carried out in industrial environments, possibly at the same location as the gas desulphurization, reducing thus the environmental impact due to reduced transportation, and improving economics. The catalyst is present in an aqueous medium that may be cost-effectively used as such directly in the Stretford process, thus omitting isolation of the quinone catalyst. The use of propanol or ethyl acetate in such environments is not unusual and may appropriately be dealt with.

### Example 1: Synthesis of the sodium salt of hydroquinone-2-sulfonic acid

The aim of this exercise is to develop a process for the preparation of the sodium salt of hydroquinone-2-sulfonic acid that is environmentally friendly. While it is known to react under acidic conditions sulfuric acid and/or oleum at high temperatures with hydroquinone, or bisulfite with quinone at low temperatures in ether based solvent, it has been found that satisfactory (almost quantitative) yields of the sodium salt of hydroquinone-2-sulphonic acid can be obtained when using ethyl acetate or 2-propanol as solvent for the quinone starting material. The process advantageously comprises the preparation of a solution of the hydroquinone or quinone in the said solvent at a temperature between 0°C and ambient temperature, the preparation of a solution of bisulfite in water, slowly adding the organic layer to the aqueous layer under vigorous stirring, and reacting the reagents at ambient temperature. The process thus shows significant advantages over prior art processes as no energy consuming cooling is required, thus improving the economics of the process on an industrial basis and reducing the environmental impact.

A solution of 34 ml of a 33% sodium bisulphite solution in water and 30 ml water has been stirred at ambient temperature in a 500 ml reactor vessel. A solution of 15 g benzoquinone in a final volume of 240 ml of ethyl acetate has been added under vigorous stirring. After further stirring for one hour, a pasty mixture is obtained to which 50 ml water has been added in order to homogenize the aqueous layer. The mixture is allowed to settle and produces 128 ml aqueous layer and 224 ml organic layer. From the aqueous layer, a 25 ml sample has been drawn off and evaporated under reduced pressure for infra-red and NMR analyses on the 6.38 g residue. Further a 5 ml sample has been taken for HPLC analysis. From the organic layer, a 25 ml sample has been drawn off and dried on 2.5 g magnesium sulphate, filtered and washed with 10 ml ethyl acetate. After evaporation a 0.02 g residue is obtained and has been analyzed by infra-red and NMR analytical techniques. A further 5 ml sample has been taken for HPLC analysis.

Results and discussion: the aqueous layer contains 32.67 g of product. HPLC analysis of the aqueous layer has shown a mixture of hydroquinonesulfonic acid and hydroquinone (3 %w/w). The dominating presence of hydroquinonesulfonic acid is confirmed by NMR. The organic layer contains 0.18 g of product. The NMR results confirm the presence of hydroquinone.

The reaction has been repeated as follows: A solution of 720 ml of a 33% sodium bisulphite solution in water and 2000 ml water has been stirred at 23°C in a 10l reactor vessel. A solution of 300 g benzoquinone in a final volume of 4800 ml of ethyl acetate has been added under vigorous stirring. Stirring is pursued for one hour. The mixture is allowed to settle and produces 3037 ml aqueous layer and 3879 ml organic layer. From the aqueous layer, a 25 ml sample has been drawn off and evaporated under reduced pressure for infra-red and NMR analyses on the 5.66 g residue. Further a 5 ml sample has been taken for HPLC analysis. From the organic layer, a 25 ml sample has been drawn off and dried on 2.5 g magnesium sulphate, filtered and washed with 10 ml ethyl acetate. After evaporation a 0.05 g residue is obtained and has been analyzed by infra-red and NMR analytical techniques. A further 5 ml sample has been taken for HPLC analysis.

Results and discussion: the aqueous layer contains 687.58 g of product. HPLC analysis of the aqueous layer has shown a mixture of hydroquinonesulfonic acid and hydroquinone (6% w/w). The dominating presence of hydroquinonesulfonic acid is confirmed by NMR. The organic layer contains 7.76 g of product. HPLC and NMR analysis of the organic layer have confirmed the sole presence of hydroquinone in that layer.

The organic layer may be recycled for further repeated use in the process, which further reduces the production costs and the environmental impact, and improves the economics. It has been found that under optimized conditions after 4 cycles, the organic layer still contains less than 1.5 w% ethyl acetate.

### Example 2: Use of Hydroxyquinone-2sulfonic acid produced as catalyst in a Stretford process

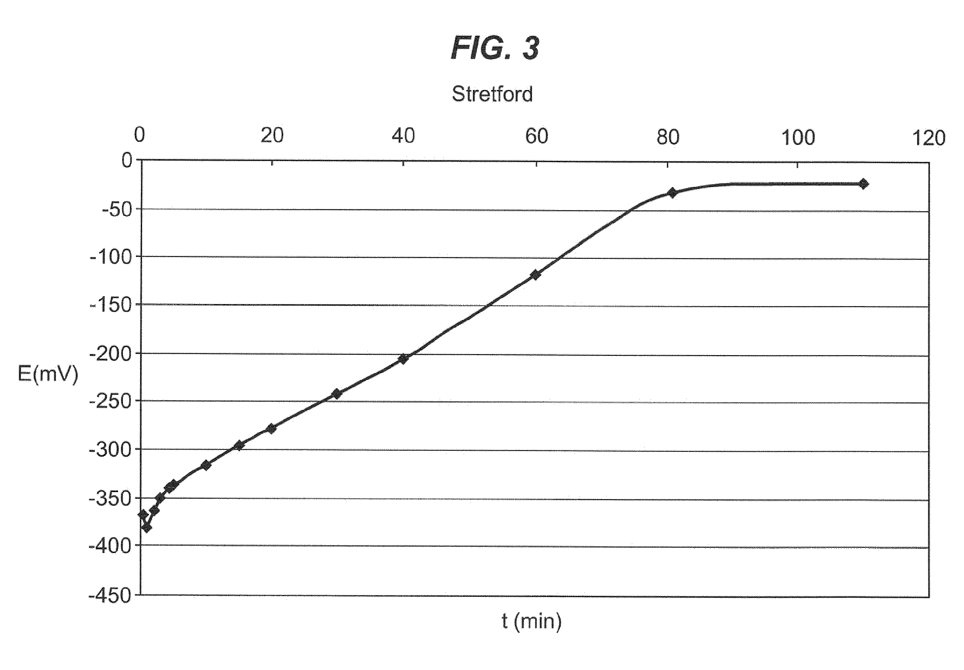

A Stretford type reaction system is simulated as follows:
1.5 l water containing 5 g Na₂CO₃ and 15 g NaHCO₃
94.4 g trisodium citrate and 47.2 g sodium ammonium vanadate
6.39 g of solid obtained after evaporation of aqueous layer obtained in Example 1 above Air bubbling
The mixture is stirred during heating up to 40°C until stabilization of the redox potential. 4g NaHS
The results are shown in the diagram attached as Fig. 3. After stabilization of the redox potential, 1.30 g of a light yellow mass (elemental sulphur) are obtained. The theoretically expected mass was 1.60 g, thus leading to a yield of 81%.

The results are comparable to whatever results obtained according to the prior art, making use of anthraquinone-2,7-disulfonic acid (ADA) but the invention process has a reduced environmental impact and improved economics, particularly if the production of the catalyst is taken into consideration.

### Example 3: Use of Hydroxyquinone-2sulfonic acid produced as catalyst in a Stretford process

A solution of 204 ml of a 33% sodium bisulphite solution in water and 180 ml water has been cooled at 4°C in a reactor vessel. A solution of 90 g benzoquinone in a final volume of 1440 ml of ethyl acetate has been added under vigorous stirring. After further stirring for one hour, a pasty mixture is obtained to which 600 ml water has been added in order to homogenize the aqueous layer. The mixture is allowed to settle and produces 1090 ml aqueous layer and 1335 ml organic layer. From the aqueous layer, a 25 ml sample has been drawn off and evaporated under reduced pressure for infra-red and NMR analyses on the 4.65 g residue. Further a 5 ml sample has been taken for HPLC analysis. From the organic layer, a 25 ml sample has been drawn off and dried on 2.5 g magnesium sulphate, filtered and washed with 10 ml ethyl acetate. After evaporation a 0.01 g residue is obtained and has been analyzed by infra-red and NMR analytical techniques. A further 5 ml sample has been taken for HPLC analysis.

HPLC analysis shows the single presence of hydroquinone sulphonic acid; 223.39 g. This finding is also confirmed by NMR.

A Stretford type reaction system is simulated as follows:
1.5 l water containing 5 g Na₂CO₃ and 15 g NaHCO₃
94.4 g trisodium citrate and 47.2 g sodium ammonium vanadate
6.39 g of solid obtained after evaporation of aqueous layer obtained above Air bubbling
The mixture is stirred during heating up to 40°C until stabilization of the redox potential. 4g NaHS

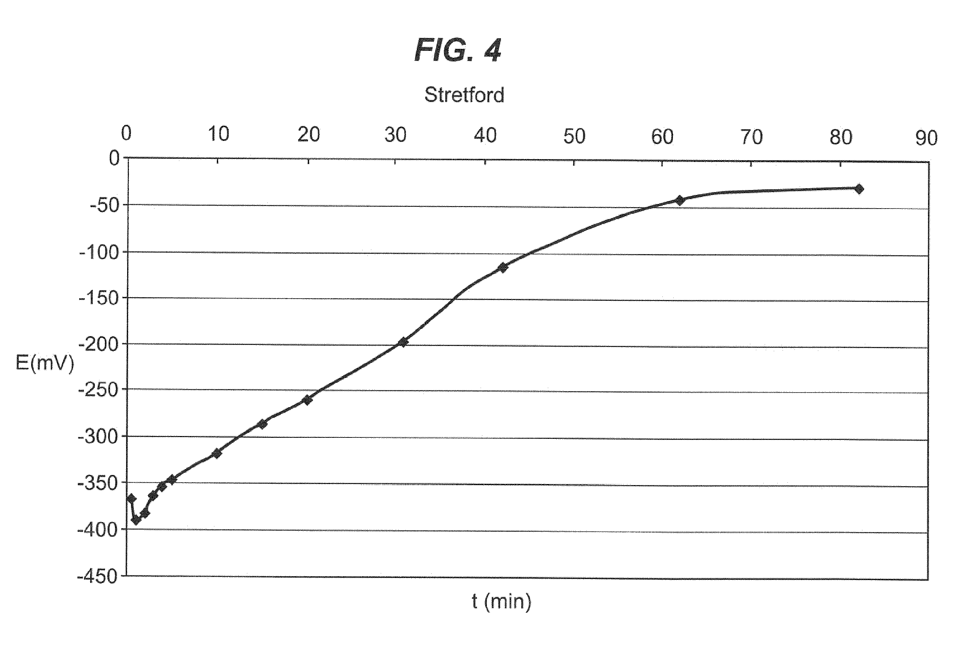

The results are shown in the diagram attached as Fig. 4. After stabilization, 1.41 g of a light yellow mass (elemental sulphur) are obtained. The theoretically expected mass was 1.60 g, thus leading to a yield of 88%.

The results are comparable to whatever results obtained according to the prior art, making use of anthraquinone-2,7-disulfonic acid (ADA) but the invention process has a reduced environmental impact and improved economics, particularly if the production of the catalyst is taken into consideration.

## Claims

1. Wet process for the desulphurization of gases containing hydrogen sulphide, comprising absorption of hydrogen sulphide in aqueous medium by a carbonate salt, oxidation of hydrogenosulphide into elemental sulphur in the presence of a vanadium compound with concomitant reduction of said vanadium compound, re-oxidation of said vanadium compound in the presence of the couple quinone-2-sulfonic acid/hydroquinone-2-sulfonic acid or quinone-2-phosphoric acid/hydroquinone-2-phosphoric acid or a salt thereof, the substituted hydroquinone catalyst being re-oxidized in the presence of oxygen.

2. Process according to claim 1 wherein the elemental sulphur is withdrawn from the reaction medium and further treated by means known per se.

3. Process according to claim 2 wherein the elemental sulphur withdrawn from the process is transferred to a centrifuge and the liquor extracted from the centrifuge is recirculated to the process.

4. Process according to claim 3 wherein the elemental sulphur is transferred to an autoclave.

5. Process according to any preceding claims wherein the said vanadium compound is a vanadate salt at oxidation state +5 which is reduced to oxidation state +4.

6. Process according to claim 5 wherein the vanadium compound at oxidation state +4 is maintained in solution by the presence of citric acid or a salt thereof.

7. Process according to any preceding claim wherein the oxygen is brought into the medium by air bubbling.

8. Process according to any preceding claim **characterized in that** it is performed in a processing unit comprising a scrubber through which hydrogen sulphide containing feed gas is circulated prior to being sent to the atmosphere, and in which the hydrogen sulphide contained in the feed gas is absorbed into the aqueous medium by a carbonate salt and oxidized into elemental sulphur in the presence of a vanadium compound; and **in that** the aqueous medium loaded with elemental sulphur is circulated to a so-called oxidizer vessel in which air is bubbled into the aqueous medium in order to re-oxidize the substituted hydroquinone catalyst and to ease separation by flotation of finely divided elemental sulphur in suspension

9. Process according to claim 8 wherein air is bubbled in the oxidizer vessel, from the bottom into the aqueous medium and the foam or froth containing elemental sulphur is drawn off and transferred to a slurry tank.

10. Process according to claim 8 or 9 wherein the aqueous medium (Stretford liquor) is withdrawn from the oxidizer vessel and is recirculated to the scrubber for further and repeated absorption of hydrogen sulphide from hydrogen sulphide laden gas.

11. Process according to any preceding claim wherein the catalyst is added to the reaction medium, in its reduced state, as the hydroquinone-2-sulfonic acid, the hydroquinone-2-phosphoric acid or a salt thereof.

12. Process according to any preceding claim wherein the catalyst is combined as an aqueous solution with the other reactants of the process.

13. Process for the preparation of hydroquinone-2-sulfonic acid and salts thereof comprising the preparation of a solution of benzoquinone in ethyl acetate or 2-propanol and cooling at approx. 0°C, preparation of a solution of bisulfite in water, mixing both solutions and stirring at a temperature between 0°C and ambient temperature, allowing the mixture to settle, and drawing off the aqueous layer, and possibly recycling the organic layer.

14. Process according to claim 13 wherein the aqueous layer drawn off the process is further evaporated for isolation of the hydroquinone-2-sulfonic acid or salts thereof.

15. Process according to Claim 13 wherein the aqueous layer drawn off the process is used in a Stretford process, such as a process according to claims 1 to 12.
